(19) Europäisches Patentamt
European Patent Office
Office européen des brevets

(11) **EP 0 295 085 B1**

## (12) EUROPEAN PATENT SPECIFICATION

(45) Date of publication and mention
of the grant of the patent:
**06.11.1996 Bulletin 1996/45**

(51) Int Cl.6: **G08B 13/24**

(21) Application number: **88305242.5**

(22) Date of filing: **08.06.1988**

(54) **Article detection and/or recognition using magnetic devices**

Magnetische Vorrichtungen verwendende Artikelermittlung und/oder -identifizierung

Détection et/ou identification d'articles utilisant des dispositifs magnétiques

(84) Designated Contracting States:
**BE DE ES FR GB IT SE**

(30) Priority: **08.06.1987 GB 8713353**

(43) Date of publication of application:
**14.12.1988 Bulletin 1988/50**

(73) Proprietor: **Esselte Meto International GmbH
D-64646 Heppenheim (DE)**

(72) Inventors:
• **Pettigrew, Robert Martin
Foxton Cambridge (GB)**
• **Davies, Dafydd Geraint
Cambridge (GB)**
• **Chambers, Steven Henry
Willingham Cambridge (GB)**
• **Crossfield, Michael David
Brackley Northants (GB)**

(74) Representative: **Abrams, Michael John et al
HASELTINE LAKE & CO.
Hazlitt House
28 Southampton Buildings
Chancery Lane
London WC2A 1AT (GB)**

(56) References cited:
**EP-A- 0 096 182       EP-A- 0 121 649
EP-A- 0 214 440       EP-A- 0 216 584**

## Description

This invention relates to magnetic devices and to their use in article recognition and/or detection.

The use of magnetic devices to act as antipilferage tags is well known. Typically, the tag is a magnetic medium which is detected when it (and the article to which it is attached) passes through a detection system, typically in the form of a walk-through framework which emits an alternating magnetic interrogation field. This field is designed to interact with a tag which has not been subjected to the routine deactivation procedure and to respond by, for example, triggering a warning signal in the event that detection of a non-deactivated tag occurs. The tag can be deactivated when a shop assistant carries out the routine procedure at the time of effecting a sale. Deactivation is usually effected by applying a magnetic field to the tag which itself includes a deactivation layer, generally in the form of a magnetically semi-hard material with a high coercive force, located close to the active element in the tag. The semi-hard deactivating layer can be magnetised by a strong magnetic field and as a result the magnetised deactivating layer prevents the magnetically soft active layer from responding when subjected to an alternating magnetic field. Such deactivation prevents detection of the magnetic tag by the detection system.

The shape of the material making up the active element of the magnetic marker strongly affects the magnetization response to an external magnetic field, because of the demagnetization factor N, which is dependent on the shape. Known markers take the form of amorphous metal ribbon ferromagnets which are formed by melt-spinning or similar techniques. These ribbons are relatively thick, generally over 10 microns and often about 25 microns in thickness.

The shape-dependent demagnetizing field $\Delta H$ is equal to the product of the shape-dependent demagnetization factor N and the intensity of magnetization M.

The effective permeability ($\mu_e$) of the tag can be derived approximately by the following formula:

$$\frac{1}{\mu_e} = \frac{1}{\mu_i} + N$$

where $\mu_i$ is the intrinsic permeability of the magnetic coating, and N is the demagnetisation factor; this (N) can be calculated as a function of the shape of the article. The inverse of the demagnetisation factor can be termed the shape factor (1/N).

The effective permeability of the active component of a tag thus depends not only on the intrinsic permeability of the material of which it is formed, but also on its shape. The lower the demagnetisation factor, the closer is the effective permeability to the intrinsic permeability. Low demagnetisation factors are also desirable since they permit a lower intensity interrogation field to be used.

We have discovered that the use of similar magnetic devices can be extended to detection/recognition systems, by means of which different types of magnetic device can be distinguished and hence also the article or class of article on which they are carried may be distinguished and identified, and the location of a given type of article may be found.

In particular, several elements with either different ferromagnetic material compositions and hence a variety of magnetically nonlinear characteristics, or several different magnetically soft and/or hard and/or semi-hard elements in proximity to one another can be used. The hard or semi-hard magnetic material acts (to a greater or lesser extent depending on magnetic and physical parameters such as coercivity, volume and spacing) as a clamp which holds the soft material in a fixed magnetic state in which there is a specific response to an interrogating (generally alternating) field. Various combinations of the different elements thus characterise different objects, and give rise to specific magnetic signatures.

EP-A-0 096 182 (Allied Corporation) discloses an article surveillance system with distinguishable magnetomechanically resonant markers.

EP-A-0 212 584 (Security Tag Systems Inc.) discloses a presence detection system with distinguishable markers comprising frequency-dividing transponders.

Neither of these inventions addresses the problem of article location, in that they both employ detection means fixed at a predetermined point, and can therefore only detect the presence of an article when that article passes this known predetermined point.

The present invention is not limited in this way, and may be used to locate and determine the nature of an article when the location of that article is unknown.

According to one aspect of the present invention, there is provided a method of recognising and locating preselected articles, which comprises applying to each article a plurality of magnetic elements in one of a number of predetermined associations (e.g. with predetermined numbers of magnetic elements and with predetermined spacings between said elements), whereby when the articles are caused to interact with a predetermined interrogating magnetic field, each particular association of magnetic elements gives rise to a characteristic magnetic signature whereby the article carrying said predetermined association can be recognised and located, characterised in that at least one of said magnetic elements is a soft magnetic material with low coercivity, high intrinsic permeability and low or zero magnetostriction, and in that at least one other of said magnetic elements is a semi-hard magnetic material.

Examples of such associations include (1) sets of hard and soft magnetic element pairs where the hard elements have various remanent magnetizations, and (2) several soft magnetic elements spaced various distances from one or more hard magnetic elements. The hard (permanent) magnetic element serves to bias the magnetic response of a soft element such that the centre of the hysteresis loop is displaced from zero applied field, so that a small constant or quasi-static external field, $H_x$ must be applied to excite the full non-linear properties of the soft element. In associations of type (1), the various pairs, with soft elements all spaced identically from their respective hard element, will show various $H_x$ because of the various magnetizations shown by the hard elements, different combinations of which can characterise different objects. In associations of type (2), the various soft elements will experience different bias fields and show a variety of $H_x$ because of the difference in the distances to the biasing element.

The or each soft magnetic element may be an amorphous metal ribbon, typically from 10 to 50 microns in thickness, and which may be formed, for example, by melt spinning. Alternatively, the or each soft magnetic element may be a thin coating of an amorphous metal glass of high intrinsic magnetic permeability, with low or substantially zero magnetostriction, and with low coercivity; and which is preferably not greater than 6 microns in thickness.

It is proposed to control nonlinear magnetic characteristics by control inter alia of the element shape and hence the demagnetization factor N. Thus a variety of elements of different shape (hence of different N) can be used for article coding. Preferably the markers are approximately ellipsoidally shaped elements, and/or are of a shape in which the demagnetization factors along two or more mutually angled (e.g. mutually orthogonal) directions are preselected. This could also involve the use of thin film and/or thick magnetic markers.

The nonlinear characteristics of soft ferromagnetic tagging elements are usually detected and measured by a rapidly varying magnetic field of one or more frequencies $f_d$ in the range 500 Hz to 100 kHz applied over a large interrogation volume. Because the soft magnetic element has a nonlinear magnetic response, signal components which are not present in the interrogation field, are generated. These signals, which are harmonically related to the frequency or frequencies $f_d$ are detected to indicate the presence of the soft magnetic element. The special identification configurations described above are characterised by a displacement (due to $H_x$) or a shear (due to N) of the hysteresis loop of the soft magnetic material. The article recognition system needs to be capable of distinguishing these changes in the nonlinear magnetic characteristics of the soft element. This can be achieved by the addition to the interrogating field of a slowly scanned bias field such as a slowly varying magnetic field with a frequency $f_s$ below 500 Hz and advantageously below 100 Hz. The value of the bias field at which the nonlinear response of each soft element is maximized can be measured and used to characterise each element. The phase and amplitude of the detected signal frequencies, $f_d$, as a function of the amplitude of the scanning field at the low frequency, $f_s$, can be used as a more sophisticated characterising feature.

Hence, in one embodiment of the invention, at least one of said magnetic elements is a soft magnetic material with low coercivity, high intrinsic permeability and low or zero magnetostriction, and wherein at least one other of said magnetic elements is a semi-hard magnetic material.

In addition, deactivating elements may be used which are magnetically selectable either by using materials of different coercive force, or elements with different demagnetization factors. This would enable the elements characterised by different frequencies to be selectively deactivated, so that article recognition codes may be changed by the user. Such selective deactivation principles are also applicable to deactivatable markers described above and to those known from the prior art.

In a further embodiment of the invention, said magnetic elements are applied to said articles when said articles are at a first location, and wherein said articles are subsequently recognised and located by applying an interrogating magnetic field, the location of a given article being related to the location of the source of the interrogating magnetic field when the magnetic signature of said given article is detected.

The first location may be a store where a multiplicity of articles of various types are held for distribution; for example, the store of articles may be a warehouse or the stock room of a retail shop. Each different type of article (identified according to any convenient system - e.g. by the character of the goods; by their price, origin, date of manufacture and/or packing, 'use by' date, and contents; or by combinations of such parameters) will carry a magnetic device characteristic of its type. Different characteristics are achieved by adopting different associations between magnetic elements. Thus by using a predetermined number of magnetic elements and a predetermined number of mutual orientations/spacings between respective elements in the magnetic device, a large number of permutations is possible each of which has a specific magnetic 'signature' - i.e. a specific, detectable interaction with the interrogating field which can be differentiated from the interaction of the other magnetic devices with the same interrogating field.

Alternatively, the first location may be a distribution point for letters, packages and the like. In this alternative, these articles may be recognised and located subsequently by magnetic means.

In a second alternative, the first point can be a point of access to an underground pipe system. In this alternative, articles can be recognised and located within an underground pipe system by magnetic means.

It will be appreciated from the above embodiments, which are given by way of example only, that the method of the invention is susceptible of application in diverse fields of commercial and technical significance.

According to a second aspect of the present invention, there is provided a series of magnetic tags or markers for use in an article recognition and location system, which markers are magnetically distinguishable from each other, characterised in that each tag or marker carries a plurality of magnetic elements including at least one soft magnetic element, the plurality of elements in each of the individually distinguishable tags or markers having a characteristic magnetic signature when subjected to an alternating magnetic field by virtue of at least one of (a) their characteristic magnetic properties; (b) their location with respect to one another on the tag or marker; (c) their shape; and (d) their orientation with respect to one another on the tag or marker. A series of such tags or markers will generally be such that each of the magnetically distinguishable tags or markers includes at least one soft magnetic element and at least one hard or semi-hard magnetic element.

According to a third aspect of the present invention, there is provided a system for determining the location and identity of an article within an article conveying network, which comprises a series of tags as defined above, and a detection system for detection and measurement of the magnetic characteristics of said tags or markers when subjected to an alternating magnetic field.

For a better understanding of the invention, and to show how the same may be put into effect, reference will now be made, by way of example, to the accompanying drawings, in which:

Figure 1 is a schematic hysteresis plot (intensity of magnetisation, M, plotted against applied field, H) illustrating one mechanism which may be utilised in the method of this invention;
Figure 2 is a second schematic hysteresis plot showing a second mechanism which may be utilised in the present invention; and
Figures 3 - 5 illustrate different embodiments of tags or markers which may be utilised in the method of this invention.

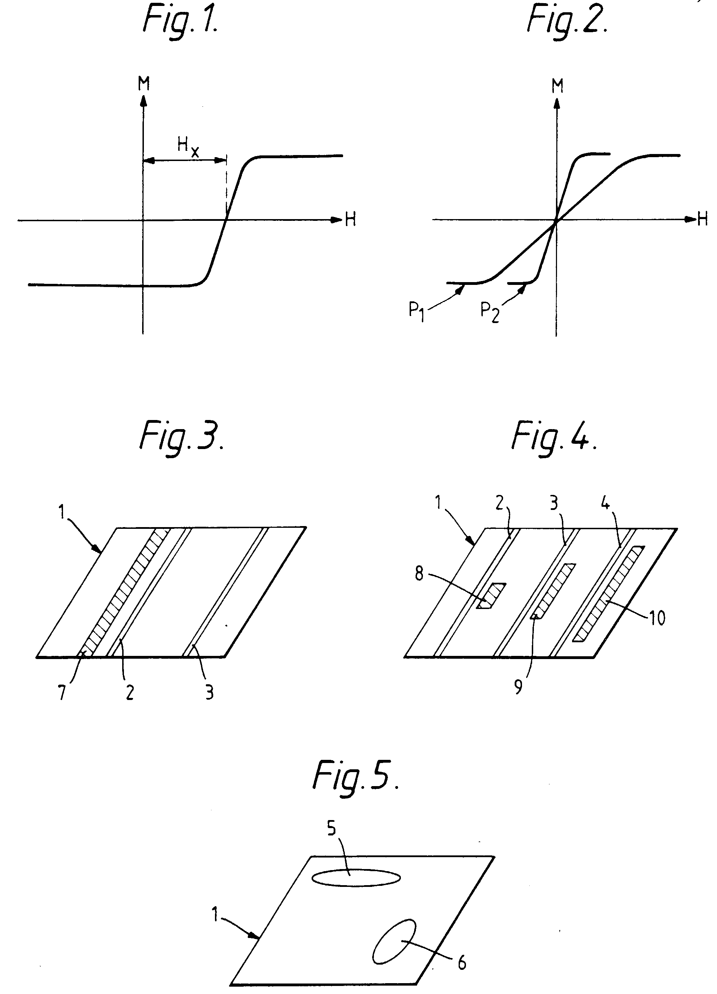

Referring now to Fig. 1, the effect of a hard magnetic element acting on a soft magnetic element is shown. As explained hereinbefore, the hard (permanent) magnetic element serves to bias the magnetic response of the soft magnetic element so that the centre of the hysteresis loop is displaced from zero applied field (H) by a value $H_x$.

Referring now to Fig. 2, two hysteresis plots are shown; the steeper plot $P_1$ represents a typical plot for a soft magnetic material with a low demagnetisation factor, N; and the more oblique plot $P_2$ represents a typical plot for a soft magnetic material with a higher value of N. As explained hereinabove, the demagnetisation factor, N, is shape-dependent and consequently the hysteresis plot in any given case can be altered in a highly specific manner by altering the shape and/or orientation of one or more soft magnetic elements located in relatively close proximity. This mechanism, together with the magnetic bias effect illustrated in Fig. 1, make it possible to produce a very large number of tags or markers which are recognisably distinct by virtue of their magnetic properties, but which can be produced relatively simply.

In Figures 3 - 5, three different configurations of magnetic elements (from the almost limitless variety which can be produced) are shown. In each of these Figures, a substrate 1 carries a series of magnetic strips or zones 2 -6 together with (in Figs. 1 and 2) one or more hard magnetic strips or zones 7 - 10. The following Examples illustrate the fabrication and functioning of these particular tags:

## EXAMPLE 1

This Example describes the production of a coded tag as shown in Fig. 3 consisting of three components: two soft ferromagnetic elements (2; 3) and a hard magnetic biassing element (7).

The soft magnetic elements 2 and 3 were fabricated from strips of a melt spun amorphous alloy produced by Vacuumschmeltze, designated Vitrovac 6025. The strips were 0.8 mm wide and 25 microns thick. The hard biassing element 7 was a strip of ductile permanent magnetic material, Crovac 250, also produced by Vacuumschmeltze. The permanent magnet strip 7 was lmm wide and 50 microns thick. All magnetic elements were initially in the form of reels of the strip material, about 500m long. The strip of Crovac was fully magnetized along its length by a large current pulse passing through a copper loop which linked the reel of strip. The three elements were then laminated onto a 2cm wide polymer carrier sheet 1 consisting of 100 micron thick "Mylar" coated with a thin layer of thermoplastic glue. The soft magnetic elements 2 and 3 were laminated onto the sheet so as to lie parallel to the permanent magnet strip, with one soft strip 2 placed at a distance of 0.8mm from the adjacent edge of the permanent magnet strip 7, and the second strip 3 at 10mm from strip 7. This spacing was achieved by the use of narrow guide pulleys, close to the point of lamination across which the strips were led as they were being unwound from the reels. A 2cm wide face paper sheet (not shown) was laminated onto the assembly immediately after the magnetic strips, to disguise and protect the magnetic elements 2, 3 and 7. The completed strip was finally cut into 5cm lengths which are used as the identifier labels.

The effect of this arrangement was to produce a displacement $H_x$ in the hysteresis loop (see Fig. 1) of approximately 100 A/m in the soft strip closest to the permanent magnet, and only 10 A/m in the more distant strip. Variations in the separations of the strips, achieved by adjustment to the positioning pulleys, led to tags with different combinations of $H_x$ and hence different codings.

## EXAMPLE 2

The procedure of Example 1 was repeated but pairs of 5cm of the magnetic elements lengths were also assembled orthogonal to each other in the form of a cross. This assembly reduces spatial orientation effects in the interrogation field.

## EXAMPLE 3

The procedure of Example 1 was repeated except that three soft magnetic strips 2, 3 and 4 each 0.8mm wide and spaced apart by 8mm were secured to the substrate 1. Three hard magnetic elements 8, 9 and 10 were likewise deposited on substrate 1. Each of these was 2mm wide, and the gap between adjacent edges of strips 2 and 8, 3 and 9 and 4 and 10, respectively was 0.8mm. Strip 8 was 1cm long; strip 9 was 2cm long; and strip 10 was 4cm long. Variations in strip dimensions and separations allow a very large number of uniquely identifiable tags to be produced.

## EXAMPLE 4

This Example describes the production of a thin film tag consisting of several thin film soft magnetic components of various shapes. The soft magnetic components were made by sputtering a layer of amorphous metal glass onto a polymer film and cutting the desired shapes from the coated film.

Sputtering is a physical vapour deposition process, carried out in a vacuum chamber, in which ions of gas, usually argon, are accelerated across a potential difference with sufficient force to eject atoms from a target. The ejected atoms travel through the partial vacuum until they collide with a surface on which they can condense forming a coating. In this example, the target was an alloy capable of forming an amorphous metal glass and consisting of cobalt (66 atom %), iron (4 atom %) molybdenum (2 atom %), silicon (16 atom %) and boron (12 atom %). The targets were manufactured by hot isostatic pressing (HIPing). With this technique, an initial ingot was made from the elements by induction melting under vacuum. The ingot was pulverised to yield a powder with maximum particle size 0.5 mm diameter. The powder was then thoroughly mixed to ensure even distribution of elements. Next, stainless steel 'cans' were manufactured to contain the powder during the HIPing process. The cans were formed from a steel block containing a trough to hold the powder, dimensions being determined by the planar magnetron used for sputtering, the trough being the width of the magnetron's 'race track'. The ends of the trough were closed off with stainless steel blocks and it was then filled with the powdered alloy. The surface was covered with a thin stainless steel sheet and sealed under a vacuum of $5 \times 10^{-4}$ torr using electron beam welding.

The HIP process was carried out at 1000°C ± 10°C and 103 MPa for 120 minutes; this resulted in 100% consolidation of the powder to a crystalline block with uniform distribution of the elements.

Finally the cans were machined to expose the consolidated powder. The stainless steel surround was then shaped to form a backing plate for the target and also a side support for clamping to the magnetron. A number of target tiles manufactured in this way can be butted together to fit any size of magnetron.

The soft magnetic layer was manufactured by sputtering a layer of the amorphous alloy one micron thick onto a continuous web of the polymer 'Upilex' (a cast polyimide manufactured by ICI and resistant to heat up to a temperature of 250°C). Sputtering took place using a low base pressure of around $10^{-6}$ torr and a purified argon gas supply. A low sputtering pressure of around 0.5 Pascals yielded a compact film which, in the finished article, gave a high magnetic permeability.

Elliptical shapes were then cut from the soft magnetic film with appropriately shaped die cutters. Ellipses used were 8mm major axis and 4mm minor axis. Sets of two ellipses (5; 6) were then laminated onto a carrier sheet 1 with glue (see Fig. 5) similar to that described in Example 1, though 4cm wide. Similarly, the magnetic elements were protected by application of a 4cm wide face sheet (not shown). The two ellipses 5 and 6 were separated on the lamination by 2cm, and positioned so that their major axes were mutually orthogonal. The laminated sheet was then cut into 4 cm lengths, each containing one set of two ellipses 5 and 6 as shown in Fig. 5.

The finished marker was such that the two soft elements presented two distinctly different hysteresis loops along either of two orthogonal directions. Alterations to the coding were achieved by using alternative elliptical shapes such as 12 mm major axis and 3 mm minor axis.

## Claims

1. A method of recognising and locating preselected articles, which comprises applying to each article a plurality of magnetic elements (2, 3, 4, 5, 6, 7, 8, 9, 10) in one of a number of predetermined associations (e.g. with predetermined numbers of magnetic elements and with predetermined spacings between said elements), whereby when the articles are caused to interact with a predetermined interrogating magnetic field, each particular association of magnetic elements (2, 3, 4, 5, 6, 7, 8, 9, 10) gives rise to a characteristic magnetic signature whereby the article carrying said predetermined association can be recognised and located, characterised in that at least one of said magnetic elements (2, 3, 4, 5, 6) is a soft magnetic material with low coercivity, high intrinsic permeability and low or zero magnetostriction, and in that at least one other of said magnetic elements (7, 8, 9, 10) is a semi-hard magnetic material.

2. A method according to claim 1, wherein said magnetic elements are applied to said articles when said articles are at a first location, and wherein said articles are subsequently recognised and located by applying an interrogating magnetic field, the location of a given article being related to the location of the source of the interrogating magnetic field when the magnetic signature of said given article is detected.

3. A method according to claim 2, characterised in that said first location is a store where a multiplicity of articles are held for distribution.

4. A method according to claim 2, characterised in that said first location is a distribution point for letters and/or packages.

5. A method according to claim 2, characterised in that said first location is a point of access to an underground pipe system.

6. A series of magnetic tags or markers (1) for use in an article recognition and location system, which markers are magnetically distinguishable from each other, characterised in that each of the magnetically distinguishable tags or markers includes at least one soft magnetic element (2, 3, 4, 5, 6) and at least one hard or semi-hard magnetic element (7, 8, 9, 10), the plurality of elements in each of the individually distinguishable tags or markers having a characteristic magnetic signature when subjected to an alternating magnetic field by virtue of at least one of (a) their characteristic magnetic properties; (b) their location with respect to one another on the tag or marker; (c) their shape; and (d) their orientation with respect to one another on the tag or marker.

7. A system for determining the location and identity of an article within an article conveying network, which comprises a series of tags as claimed in claim 6, and a detection system for detection and measurement of the magnetic characteristics of said tags or markers when subjected to an alternating magnetic field.

**Patentansprüche**

1. Verfahren zum Erkennen und Ausfindigmachen vorausgewählter Artikel, umfassend das Anbringen einer Anzahl Magnetbauteile (2, 3, 4, 5, 6, 7, 8, 9, 10) an jedem Artikel, und zwar in einer Zusammenstellung aus einer Anzahl vorbestimmter Zusammenstellungen, z. B. mit vorbestimmten Anzahlen der Magnetbauteile und mit vorbestimmten Abständen zwischen den Bauteilen, wobei jede besondere Zusammenstellung von Magnetbauteilen (2, 3, 4, 5, 6, 7, 8, 9, 10) eine typische magnetische Kennzeichnung erzeugt, wenn die Artikel dem Zusammenwirken mit einem vorbestimmten magnetischen Abfragefeld unterworfen werden, und der Artikel, der die vorbestimmte Zusammenstellung trägt, erkannt und ausfindig gemacht werden kann,

dadurch gekennzeichnet, daß zumindest eines der Magnetbauteile (2, 3, 4, 5, 6) ein weichmagnetisches Material mit geringer Koerzitivität, großer Eigenpermeabilität und geringer oder verschwindender Magnetostriktion ist, und daß mindestens ein weiteres Magnetbauteil (7, 8, 9, 10) ein magnetisch halbhartes Material ist.

2. Verfahren nach Anspruch 1, wobei die Magnetbauteile an den Artikeln angebracht werden, wenn sich diese an einem ersten Ort befinden, und die Artikel nachfolgend durch das Anwenden eines magnetischen Abfragefeldes erkannt und geortet werden, und der Ort eines gegebenen Artikels mit dem Quellort des Abfragemagnetfelds verknüpft wird, wenn die magnetische Kennzeichnung des gegebenen Artikels erfaßt wird.

3. Verfahren nach Anspruch 2, dadurch gekennzeichnet, daß der erste Ort ein Lager ist, in dem eine Vielzahl verschiedener Artikel zum Verteilen bereitgehalten wird.

4. Verfahren nach Anspruch 2, dadurch gekennzeichnet, daß der erste Ort eine Verteilstelle für Briefe und/oder Pakete ist.

5. Verfahren nach Anspruch 2, dadurch gekennzeichnet, daß der erste Ort ein Zugangspunkt zu einem unterirdischen Rohrsystem ist.

6. Reihe von magnetischen Anhängern oder Markern (1), geeignet zum Gebrauch in einem Artikelerkennungs- und Ortungssystem, wobei die Marker magnetisch voneinander unterscheidbar sind,

dadurch gekennzeichnet, daß jeder der magnetisch unterscheidbaren Anhänger oder Marker mindestens ein weichmagnetisches Bauteil (2, 3, 4, 5, 6) und zumindest ein magnetisch hartes oder halbhartes Bauteil (7, 8, 9, 10) enthält, und die Anzahl Bauteile in jedem der einzeln unterscheidbaren Anhänger oder Marker eine typische magnetische Kennzeichnung aufweist, wenn sie einem magnetischen Wechselfeld ausgesetzt werden, und zwar aufgrund zumindest einer Eigenschaft aus der Gruppe mit a) ihren typischen magnetischen Eigenschaften, b) ihrer gegenseitigen Lage auf dem Anhänger oder Marker, c) ihrer Form und d) ihrer aufeinander bezogenen Richtung auf dem Anhänger oder Marker.

**7.** System zum Bestimmen des Orts und der Identität eines Artikels in einem Artikelbeförderungsnetzwerk, umfassend eine Reihe von Anhängern nach Anspruch 6, und ein Erfassungssystem zum Erfassen und Messen der magnetischen Eigenschaften der Anhänger oder Marker, wenn sie einem wechselnden Magnetfeld ausgesetzt werden.

## Revendications

**1.** Procédé d'identification et de localisation d'articles présélectionnés qui comprend l'application à chaque article d'une pluralité d'éléments magnétiques (2, 3, 4, 5, 6, 7, 8, 9, 10) dans une association parmi un nombre d'associations prédéterminées (par exemple avec des nombres prédéterminés d'éléments magnétiques et avec des espacements prédéterminés entre lesdits éléments), moyennant quoi lorsqu'on fait interagir les articles avec un champ magnétique d'interrogation prédéterminé, chaque association particulière d'éléments magnétiques (2, 3, 4, 5, 6, 7, 8, 9, 10) engendre une signature magnétique caractéristique par laquelle l'article portant ladite association prédéterminée peut être reconnu et localisé, caractérisé en ce qu'au moins un desdits éléments magnétiques (2, 3, 4, 5, 6) est un matériau magnétique souple avec une faible coercivité, une perméabilité intrinsèque élevée et une magnétostriction faible ou nulle, et en ce qu'au moins un autre desdits éléments magnétiques (7, 8, 9, 10) est un matériau magnétique semi-dur.

**2.** Procédé selon la revendication 1, dans lequel lesdits éléments magnétiques sont appliqués auxdits articles lorsque lesdits articles sont sur un premier emplacement, et dans lequel lesdits articles sont ensuite identifiés et localisés par application d'un champ magnétique d'interrogation, l'emplacement d'un article donné étant fonction de l'emplacement de la source du champ magnétique d'interrogation lorsque la signature magnétique dudit article donné est détectée.

**3.** Procédé selon la revendication 2, caractérisé en ce que ledit premier emplacement est un magasin où une multiplicité d'articles sont stockés pour être distribués.

**4.** Procédé selon la revendication 2, caractérisé en ce que ledit premier emplacement est un point de distribution pour les lettres et/ou les paquets.

**5.** Procédé selon la revendication 2, caractérisé en ce que ledit premier emplacement est un point d'accès à un réseau de tuyaux souterrain.

**6.** Série d'étiquettes ou de marqueurs magnétiques (1) destinés à être utilisés dans un système d'identification et de localisation d'articles, lesquels marqueurs peuvent être différenciés magnétiquement les uns des autres, caractérisée en ce que chacun des étiquettes ou marqueurs pouvant être différencié magnétiquement comprend au moins un élément magnétique souple (2, 3, 4, 5, 6) et au moins un élément magnétique dur ou semi-dur (7, 8, 9, 10), la pluralité des éléments dans chacun des étiquettes ou marqueurs pouvant être différencié magnétiquement ayant une signature magnétique caractéristique lorsqu'elle est soumise à un champ magnétique alternatif en vertu d'au moins une (a) de leurs propriétés magnétiques caractéristiques ; (b) de leur emplacement par rapport un autre sur l'étiquette ou le marqueur ; (c) de leur forme et (d) de leur orientation par rapport à un autre sur l'étiquette ou le marqueur.

**7.** Système destiné à déterminer l'emplacement et l'identité d'un article à l'intérieur d'un réseau d'acheminement d'articles, qui comprend une série d'étiquettes comme revendiqué dans la revendication 6, et un système destiné à détecter et à mesurer les caractéristiques magnétiques desdites étiquettes ou desdits marqueurs lorsqu'ils sont soumis à un champ magnétique alternatif.

Fig.1.

Fig.2.

Fig.3.

Fig.4.

Fig.5.